# EUROPEAN PATENT SPECIFICATION

(11) **EP 4 011 101 B1**
(45) Date of publication and mention of the grant of the patent: **16.07.2025**
(21) Application number: 19941232.1
(22) Date of filing: 09.08.2019
(51) Int. Cl.: H04W 4/02, H04W 64/00, G01S 5/00

(54) **COORDINATION OF LOCATION REQUESTS**
KOORDINIERUNG VON STANDORTANFRAGEN
COORDINATION DE REQUÊTES DE POSITIONNEMENT

(43) Date of publication of application: 15.06.2022
(73) Proprietor: Nokia Solutions and Networks Oy, 02610 Espoo (FI)
(72) Inventor: KELLEY, Sean, Hoffman Estates, Illinois 60010 (US); PEREZ, Eva, 81543 Munich (DE); SHEN, Yang, Beijing 100020 (CN)
(74) Representative: Mudge, Kevin
(86) International application number: PCT/CN2019/100083
(87) International publication number: WO 2021/026700

(56) References cited:
- US-A1- 2018 199 160
- US-A1- 2019 045 477
- NOKIA ET AL: "Support of Concurrent Location Request", vol. SA WG2, no. Sapporo, Japan; 20190624 - 20190628, 28 June 2019 (2019-06-28), XP051755163, Retrieved from the Internet <URL:http://www.3gpp.org/ftp/tsg_sa/WG2_Arch/TSGS2_134_Sapporo/Docs/S2-1908110.zip> [retrieved on 20190628]
- 3GPP: "3rd Generation Partnership Project; Technical Specification Group Services and System Aspects; Study on Enhancement to the 5GC LoCation Services (Release 16)", 3GPP TR 23.731 V0.8.0 (2018-12), 31 December 2018 (2018-12-31), pages 1 - 171, XP051591034
- QUALCOMM INCORPORATED: "NG-RAN Positioning Architecture and Procedures", 3GPP DRAFT; R3-190191_(NG-RAN POSITIONING ARCHITECTURE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20190225 - 20190301, 15 February 2019 (2019-02-15), Mobile Competence Centre ; 650, route des Lucioles ; F-06921 Sophia-Antipolis Cedex ; France, XP051604135

## Description

### FIELD

Embodiments of the present disclosure generally relate to the field of telecommunication and in particular, to a method and a device.

### BACKGROUND

In recent years, different communication technologies have been proposed to improve communication performances, such as, the New Radio (NR) (also referred to 5 generation (5G)) system. Some new network architectures have been proposed. For the 3rd Generation Partnership Project (3GPP) Release 15 (Rel-15), the architecture for positioning user equipment (UE) basically relies on two core network entities, i.e., the Location Management Function (LMF) and the Access and Mobility Management Function (AMF).

In Rel-16, a solution where the next generation radio access network (NG-RAN) node is enhanced to support location management functionality has been proposed to achieve low latency and high-performance location services (LCS). As such, there may be situations where concurrent location requests for the same UE are handled by two nodes, for example, one being handled by the NG-RAN locally and the others being handled by the LMF in the core network. Therefore, it is desirable to coordinate such concurrent location requests.

### SUMMARY

The present invention provides for a device and corresponding method as claimed in the accompanying claims.

### BRIEF DESCRIPTION OF THE DRAWINGS

Some example embodiments will now be described with reference to the accompanying drawings, where:
Fig. 1 illustrates example system architecture for positioning UE;
Fig. 2 illustrates an example environment in which embodiments of the present disclosure may be implemented;
Fig. 3 illustrates a flowchart illustrating an example process for handling internal location request at NG-RAN;
Fig. 4 illustrates a flowchart illustrating an example process for handling concurrent location requests according to some embodiments of the present disclosure;
Fig. 5 illustrates a flowchart illustrating an example process for handling concurrent location requests according to some embodiments of the present disclosure;
Fig. 6 illustrates a flowchart of an example method according to some embodiments of the present disclosure;
Fig. 7 illustrates a flowchart of an example method according to some embodiments of the present disclosure;
Fig. 8 illustrates a flowchart of an example method according to some embodiments of the present disclosure;
Fig. 9 illustrates a simplified block diagram of an apparatus that is suitable for implementing embodiments of the present disclosure; and
Fig. 10 illustrates a block diagram of an example computer readable medium in accordance with some embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

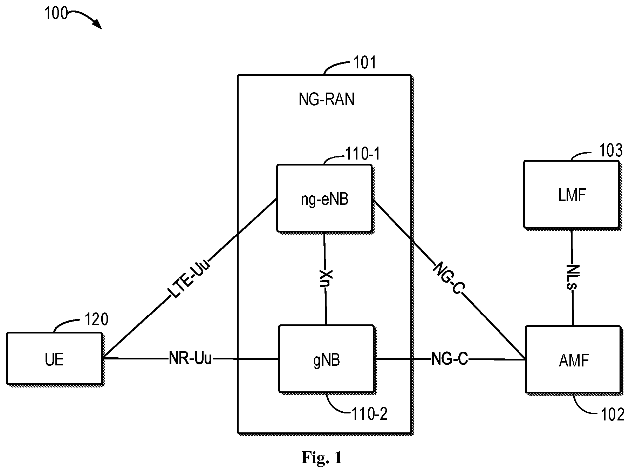

As mentioned above, in Rel-15, the UE positioning architecture is reliant on AMF and LMF, which are entities in the core network. Fig. 1 illustrates an example architecture 100 for positioning UE. In the example shown in Fig. 1, the NG-RAN 101 comprises two network devices, such as ng-eNB 110-1 and gNB 110-2, which communicate with each other over the Xn interface. AMF 102 communicates with the ng-eNB 110-1 and gNB 110-2 over NG-C interfaces and communicates with LMF 103 over the NLs interface. The UE 120 communicates with the ng-eNB 110-1 and gNB 110-2 over the LTE-Uu interface and the NR-Uu interface, respectively.

In such architecture 100, the LMF 103 manages the overall co-ordination and scheduling of resources required for the location of a UE (e.g., the UE 120) that is registered with or accessing the 5G core network. The AMF 102 receives a location request from another entity, e.g. Gateway Mobile Location Center (GMLC, not shown herein) in case of Mobile Terminated Location Request (MT-LR), or UE 120 in case of Mobile Originated Location Request (MO-LR). Alternatively, the AMF 102 decides itself to initiate a location request (in case of Network Induced Location Request (NI-LR)), selects an appropriate LMF (e.g., the LMF 103) to handle the request, and transfers the request to the selected LMF. Location request from the NG-RAN 101 is not supported.

Specifically, the AMF 102 receives a request for some location service associated with the target UE 120 from another entity (e.g., GMLC) or the AMF 102 itself decides to initiate some location service on behalf of the target UE 120 (e.g., for an IMS emergency call from the UE 120). The AMF 102 then sends a location services request to the LMF 103. The LMF 103 processes the location services request which may include transferring assistance data to the target UE 120 to assist with UE-based and/or UE-assisted positioning and/or may include positioning of the target UE 120. The LMF 103 then returns the result of the location service back to the AMF 102 (e.g., a position estimate for the UE 120). In the case of a location service requested by an entity other than the AMF 102 (e.g., a GMLC), the AMF 102 returns the location service result to this entity.

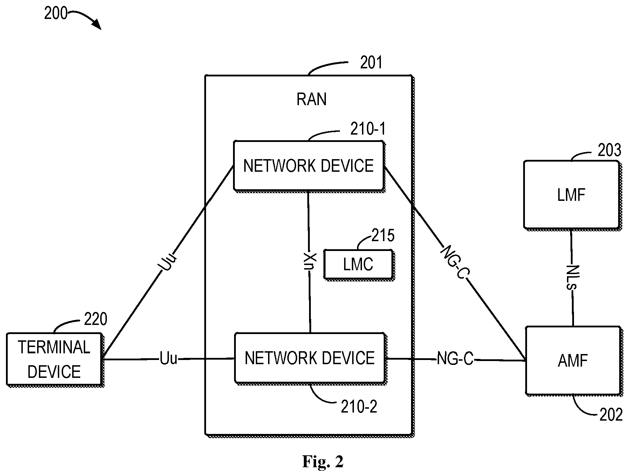

In Rel-16, a solution to achieve low latency location services (LCS) where the NG-RAN node is enhanced to support "local" location management functionality is proposed. Fig. 2 illustrates an example environment 200 in which embodiments of the present disclosure may be implemented. The environment 200, which is a part of a communication network, comprises a terminal device 220, for example, a UE.

The environment 200 also comprises a radio access network (RAN) 201, for example, a NG-RAN. The RAN 201 includes two network devices 210-1 and 210-2 (which may be referred to as network devices 210 collectively, or referred to as a network device 210 individually). Each of the two network devices 210-1 and 210-2 may comprise an ng-eNB or a gNB. The terminal device 220 can communicate with the network devices 210-1 and 210-2 in the RAN 201 over Uu interfaces. The communication between the terminal device 220 and the network device 210 may follow any suitable wireless communication standards or protocols and employs any suitable communication technologies. The communication standards or protocols and technologies may include those that already exist or are to be developed in the future. The scope of the present disclosure will not be limited in this regard.

As shown in Fig. 2, the environment 200 further comprises an AMF 202 and an LMF 203, which are entities in the core network (not shown). The AMF 202 may communicate with the network devices 210-1 and 210-2 in the RAN 201 over NG-C interfaces. The NLs interface, between the LMF 203 and the AMF 202, is transparent to all UE related, gNB related and ng-eNB related positioning procedures. It is to be understood that the devices or functions are shown in Fig. 2 only for the purpose of illustration without suggesting any limitation to the scope of the present disclosure. The environment 200 may include any suitable other devices, functions or elements to enable coordination of location requests or to provide other services.

The RAN 201 may also comprise one or more location management component (LMC). As shown, the RAN 201 comprises an LMC 215. One of the principle new use cases for the LMC 215 is to support location service requests that originate internal to the RAN 201, e.g. for purposes such as Radio Resource Management (RRM), Minimization of Drive Tests (MDT), etc. This type of location request can be referred to as RAN Induced Location Request (RI-LR). The LMC 215 is ideally suited to handle RI-LR since the necessary operations are internal to the RAN 201 and can therefore be handled locally, avoiding the additional latency and network interface signaling that would be incurred if RI-LR was handled by the LMF 203.

It is to be understood that the example architecture shown in Fig. 2 is only for purpose of illustration without any limitation. In some example embodiments, the LMC 215 may be implemented within each or one of the network devices 210-1 and 210-2. For example, the LMC 215 may be implemented as part of an ng-eNB or a gNB. In some example embodiments, the LMC 215 may be implemented separately from the network devices 210-1 and 210-2. For example, the LMC 215 may be implemented as or included in another network device separated from the network devices 210-1 and 210-2. The scope of the present disclosure in this regard is not limited.

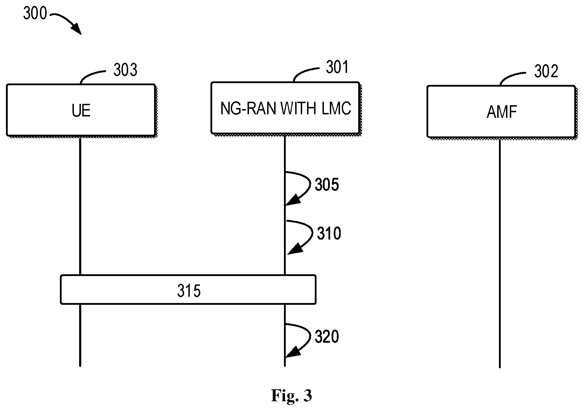

A general procedure for RI-LR handled locally by the LMC is now described with reference to Fig. 3. Fig. 3 illustrates a flowchart illustrating an example process 300 for handling internal location request at NG-RAN 301 with an LMC. In this scenario, the UE 303 is assumed to be in connected mode prior to the beginning of the process 300.

Some function in the NG-RAN 301 (e.g. RRM, MDT) requests some location service (e.g. positioning) for a target UE 303 to the LMC using signaling internal to the NG-RAN 301. As such, a RI-LR is initiated 305. The NG-RAN 301, in particular the LMC, instigates 310 location procedures internal to the NG-RAN 301 node - e.g. to obtain positioning measurements or assistance data. The LMC may also instigate location procedures with neighbor NG-RAN node(s) - e.g. to obtain assistance data such as Positioning Reference Signal (PRS) configuration of Transmission Points (TPs) served by the neighbor NG-RAN node(s).

In addition, or alternatively, for downlink positioning NG-RAN 301 with the LMC instigates 315 location procedures with the UE 303 - e.g. to obtain a location estimate or positioning measurements or to transfer location assistance data to the UE 303. The LMC provides 320 a location service response to the requesting function in the NG-RAN 301 and includes any needed results - e.g. success or failure indication and, if requested and obtained, a location estimate for the UE 303. As can be seen, the AMF 302 in the core network is not involved in such a process 300. Information about the RI-LR is not transmitted to the AMF 302, which thus is not aware of the positioning operation performed at the NG-RAN 301.

In deployments where there are NG-RAN nodes supporting an LMC, the LMC is unlikely to be used for all types of location requests. For example, it may be desirable to use the LMC only for location requests that require high level quality of service (QoS), e.g. low latency, while less demanding location requests continue to be served by the LMFs in the core network. This is due to the more limited resources (e.g. processing power) at the NG-RAN node.

The inventors have realized that a problem may occur when there are multiple concurrent location requests. Assuming RI-LR and low latency requests should be handled by the LMC, then there are different scenarios for concurrently handling other types of location requests (e.g. MT-LR with "normal" latency), where it is preferred to handle the other types of location requests in either the LMC or LMF depending on the scenario. For example, it may be preferred to handle non-latency sensitive location requests in the LMC only if there is an active/ongoing location session in the LMC (for a low latency request) since there may be efficiencies in handling both requests by the same node. Or, it may be preferred to always handle non-latency sensitive location requests in an LMF but ensure that the positioning method(s) and/or resource configurations are compatible with those simultaneously being used by the LMC.

Therefore, there is a need to coordinate RI-LR handled locally in the NG-RAN node with other location request types (e.g. MT-LR, MO-LR) for the same target UE that are received by the AMF.

In LTE, location service requests initiated by the RAN (e.g. RI-LR) are not supported, so the issue of coordinating location management in the RAN with location management in the core network did not exist in LTE.

RAN as an LCS Client has been previously proposed, where the RAN sends a location service request to the AMF which the AMF handles as any other location service request received from another entity, including LMC/LMF selection. However, LMC/LMF selection is undesirable in this case since the NG-RAN node can decide on its own to use the LMC and avoid latency introduced by AMF involvement.

The NG-RAN node is always allowed to reject requests received from an LMF via NR Positioning Protocol A (NRPPa). Therefore, one way to avoid uncoordinated actions between an LMC and an LMF is for the NG-RAN node to reject location sessions initiated by the LMF while a location session initiated by the LMC is ongoing. However, this results in a failed location request which is of course undesirable.

On the support of concurrent location requests, two cases where Concurrent Location Requests occur have been defined as the following. Concurrent Location Requests occur when any entity (e.g. UE, AMF, LMF, GMLC, NEF): receives/initiates multiple LCS requests (e.g. 5GC-MT LR, 5GC-MO LR, 5GC-NI LR) for the location estimate of the same target UE within a time period (Case A); or receives/initiates one or more new LCS request(s) (e.g. 5GC-MT LR, 5GC-MO LR, 5GC-NI LR) for the location estimate of the same target UE during the location session to support the old LCS request(s) (Case B).

In either case, if allowed by the QoS requirements and privacy settings, the entity may combine the concurrent location requests by fully executing one of the requests and using the ensuing location estimate result(s) to satisfy the other request(s) without fully executing the latter. When concurrent location requests are supported, each entity needs to ensure that it correlates each location/position response with the associated request and different concurrent location requests shall be treated separately without any dependency on one another by any entity.

In the above conventional solutions, the concurrent location requests cannot be coordinated in an efficient way. Therefore, a solution is needed to enable efficient coordination of concurrent location requests for a same target UE, for example, efficient coordination of RI-LR handled locally in the NG-RAN node with other location request types for the same target UE that are received by the AMF.

According to embodiments of the present disclosure, there is proposed a solution for coordination of concurrent location requests for the same target device. In the present disclosure, a terminal device may have a "local" location session handled by the LMC of the serving RAN (e.g., NG-RAN). The serving RAN provides information about the "local" location session to the AMF in the core network. The AMF stores this information in the context of the terminal device, and uses this information to efficiently handle new location service requests (e.g. MT-LR, MO-LR) that the AMF receives while the "local" location session is active/ongoing. Embodiments of the present disclosure can enable coordinated and efficient handling of concurrent location requests for the terminal device.

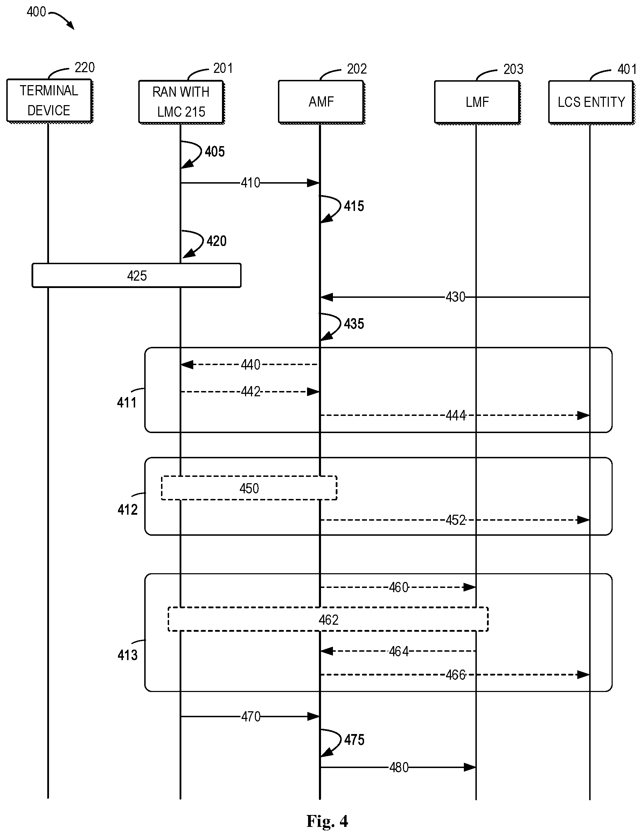

Principle and implementations of the present disclosure will be described in detail below with reference to Fig. 4, which illustrates a flowchart illustrating an example process 400 for handling concurrent location requests according to some embodiments of the present disclosure. For the purpose of discussion, the process 400 will be described with reference to Fig. 2. The process 400 may involve the terminal device 220, the RAN 201, the AMF 202, and the LMF 203 as illustrated in Fig. 2. Although the process 400 is described with respect to the RAN 201, in some example embodiments, the actions described with respect to the RAN 201 may be specifically implemented at a network device in the RAN 201. For example, in the case where the LMC 215 is implemented within the network device 210, the actions may be implemented at the network device 210. In the case where the LMC 215 is implemented as a further network device separated from the network device 210, the actions may be implemented at the further network device.

Some function in the RAN 201 may request some location service (e.g. positioning) for the terminal device 220 to the LMC using signaling internal to the RAN 201. As such, a RI-LR for the terminal device 220 is initiated 405. In other word, a positioning operation of the terminal device 220 is started at the RAN 201.

The RAN 201 transmits 410 information concerning the positioning operation at the RAN 201 to the AMF 202 in the core network. The information concerning the positioning operation may be also referred to as "location management information" herein. The location management information may be transmitted to the AMF 202 for example via a new or existing message, such as a NG Application Protocol (NGAP) message. Whenever the positioning operation or the RI-LR location session is started or changed or stopped for the terminal device 220, the location management information may be transmitted or updated to the AMF 202. In this way, the AMF 202 is aware of the positioning operation at the RAN 201, for example aware of the RI-LR.

To better understand the coordination proposed herein, a description of the location management information is now given. The location management information may include a state indication of the positioning operation, for example to indicate the state of the "local" location session. The state indication may indicate that the positioning operation has been started or is being performed at the RAN 201 (e.g., "start"). When the positioning operation at the RAN 201 is terminated or stopped, the state indication may be updated or another state indication may be transmitted to indicate that the positioning operation has been stopped or terminated at the RAN 201 (e.g., "stop").

In addition to the state indication of the positioning operation, the location management information may include one or more attributes associated with the positioning operation that may be useful for the AMF 202. For example, the location management information may comprise information about the internal location service request being handled by the LMC 215. In case of the positioning operation being started, such information may comprise, but not limited to, Location Quality of Service information, e.g. LCS accuracy, response time (latency), QoS Class, etc.; type of the location service request, e.g. Location Immediate Request (LIR) or Location Deferred Request (LDR); LCS Client identity; start time, stop time; requested type of location, i.e. "current location", "current or last known location" or "initial location" applicable to LIR only; Type of Event, e.g. motion or periodic location, in case of "LDR"; velocity of the terminal device 220; requested maximum age of location; and the like.

It is to be noted that a change of location management information can be treated as a different type of state indication of location session (e.g. "update"). Alternatively, the change of location management information can be more simply treated as the start of a new location session or of a new positioning operation (e.g. "start"). This implicitly means that the location session or positioning operation with the previous attributes has been stopped/replaced.

In some example embodiments, when the location session or positioning operation is terminated, the RAN 201 may transmit to the AMF 202 a state indication that the positioning operation is terminated at the RAN 201, for example as part of the location management information. Additionally, the RAN 201 may further transmit the location estimate of the terminal device 220 as part of the location management information, for example if requested by the AMF 202. In some example embodiments, the RAN 201 may also transmit information about other location service requests that are being handled by the LMC 215 but which the LMC 215 prefers to move to an LMF, e.g. the LMF 203. Such location service requests may comprise for example MT-LR, MO-LR, or NI-LR. The information about the other location service requests may comprise similar attributes as described above with respect to the location management information.

Still refer to Fig. 4. The location management information transmitted 410 by the RAN 201 may comprise a state indication of the positioning operation which is set to indicate that the location session is started and information about the location session at the RAN 201. After receiving the location management information from the RAN 201, the AMF 202 stores 415 the received location management information in the context of the terminal device 220. The AMF 202 may not need to perform LMC/LMF selection and may not need to send any response or acknowledgement to the RAN 201.

The RAN 201 then performs the positioning operation of the terminal device 220. As shown in Fig. 4, the RAN 201, in particular the LMC 215, instigates 420 location procedures internal to the RAN 201 to obtain positioning measurements or assistance data. The LMC 215 may also instigate location procedures with neighbor RAN node(s) as described with Fig. 3. In addition, or alternatively, for downlink positioning RAN 201 with the LMC 215 instigates 425 location procedures with the terminal device 220, for example to obtain a location estimate or positioning measurements or to transfer location assistance data to the terminal device 220.

At the AMF 202, based on the stored 415 location management information, the AMF 202 may take corresponding actions if it receives a new/concurrent location request (e.g. MO-LR, MT-LR, NI-LR) for the terminal device 220 while there is an active/ongoing location session at the LMC 215 for the terminal device 220, i.e., the positioning operation is being performed at the RAN 201.

The AMF receives 430, from an LCS entity 401 in the 5GC, a location request for a location of the terminal device 220, which will be referred to as location request or concurrent location request hereinafter. For example, the LCS entity 401 may transmit to the AMF 202 a location service request (e.g. positioning) for the terminal device 220. It is to be understood that the LCS entity 401 may be any suitable LCS entity, for example the GMLC.

By checking the context of the terminal device 220, the AMF 202 determines 435 that the positioning operation for the terminal device 220 is being performed at the RAN 201 and also the attributes of the positioning operation. In other words, the AMF 202 may be aware that a location session is active/ongoing at the LMC 215, and also aware of the attributes of the active/ongoing location session. Then, the AMF 202 may handle the concurrent location request based on the stored location management information for the terminal device 220. Blocks 411, 412 and 413 refer to different example options A, B, C that can be utilized by the AMF 202 to handle this concurrent location request. These example embodiments are now described in detail.

In some example embodiments, the AMF 202 may transfer the concurrent location request (e.g.MT-LR) to the RAN 201 for handling by the LMC 215. Such example embodiments are now described with respect to the actions in the block 411 only for purpose of illustration without any limitation. If the AMF 202 determines that the positioning operation of the terminal device 220 is being performed at the RAN 201, the AMF 202 transmits 440 the concurrent location request to the RAN 201 to enable the RAN 201 (for example, the LMC 215) to handle this location request.

Upon receiving the concurrent location request from the AMF 202, the RAN 201, for example the LMC 215 may handle both the concurrent location request and the internal location request (e.g. RI-LR) in a coordinated and efficient way. In some example embodiments, the RAN 201 may perform a further positioning operation to handle this concurrent location request, in order to determine the location information of the terminal device 220. The further positioning operation is compatible with the positioning operation being performed to handle the internal location request. The further positioning operation may be selected from a variety of positioning methods, such as Enhanced Cell ID (E-CID) positioning method, Observed Time Difference of Arrival (OTDOA) positioning method, Global Navigation Satellite System (GNSS) positioning method, etc.

In some example embodiments, the RAN 201 may select a particular positioning method to concurrently handle both the location request received from the AMF 201 and the internal location request. The particular positioning method may be a positioning method which can satisfy the most demands of both requests.

Upon determining the location information of the terminal device 220, the RAN 201 may generate the response to the concurrent location request based on the location information. Then, the RAN 201 transmits 442 to the AMF 202 the response to the concurrent location request, which is subsequently forwarded 444 by the AMF 202 to the LCS entity 401.

In such example embodiments, the concurrent location request is handled by the same entity with the internal location request, i.e. the RAN 201. The AMF 202 may select to transfer the concurrent location request to the RAN 201 as long as there is an active/ongoing location session at the LMC 215.

In some example embodiments, the AMF 202 may handle the concurrent location request (e.g. MT-LR) itself. Such example embodiments are now described with respect to the actions in the block 412 only for purpose of illustration without any limitation. A query procedure 450 may be performed between the AMF 202 and the RAN 201. For example, the AMF 202 may query the RAN 201 for the latest available location information of the terminal device 220, if the ongoing location session at the RAN 201 has appropriate attributes in terms of e.g. accuracy, expected age, etc. Then, the RAN 201, for example the LMC 215, provides the already available location information of the terminal device 220 to the AMF 202. The response to the concurrent location request is then generated and transmitted 452 to the requesting entity 401.

As an example process of the option B as schematically shown in the block 412, the AMF 202 may determine, based on the location management information and the concurrent location request, whether an attribute included in the concurrent location request matches a corresponding attribute of the positioning operation. For example, the AMF 202 may determine whether the internal location request at the RAN 201 has a same or similar positioning accuracy with the concurrent location request. If the AMF 202 determines that the attribute included in the concurrent location request matches the corresponding attribute of the positioning operation, for example, if the AMF 202 determines that the internal location request at the RAN 201 has a same positioning accuracy with the concurrent location request, the AMF 202 may transmit to the RAN 201 a request for the location information of the terminal device 220. The RAN 201 may provide the AMF 202 with the location information of terminal device 220 which has been determined. The AMF 202 may then generate the response to the concurrent location request based on the received location information.

In such example embodiments, when the functionality of Concurrent Location Requests is supported at the AMF 202 (if allowed by the QoS requirements and privacy settings), the AMF 202 may indicate to the LMC 215 its capability of Concurrent Location Request handling. The LMC 215 will not initiate another session for the concurrent location request and will only report location estimate result of the terminal device 220 to the AMF 202 once it is available (for example, as a result of the ongoing RI-LR). The location estimate result will then be used by the AMF 202 for responding to the concurrent location request (e.g. 5GC-MT LR, 5GC-MO LR and 5GC-NI LR) that is subject to Concurrent Location Request handling at the AMF.

In such example embodiments, the location information of the terminal device which is already available at the LMC is leveraged, and thus no additional RAN resource is required. Also, transferring of the concurrent location request (e.g., non-latency-sensitive MT-LR) from the AMF to the LMC can be avoided.

In some example embodiments, the AMF 202 may select a LMF (for example, the LMF 203) to handle the concurrent location request (e.g. MT-LR). In such example embodiments, the selected LMF 203 may be also referred to as an enhanced LMF, of which the functionality is enhanced compared to that of a conventional LMF. Such example embodiments are now described with respect to the actions in the block 413 only for purpose of illustration without any limitation.

The AMF 202 transmits 460 the concurrent location request to the selected LMF 203, along with at least part of the location management information about the terminal device 220 which is previously received from the RAN 201. The LMF 203 takes the location management information into account when handling the concurrent location request. The LMF 203 is able to request the latest available location information of the terminal device 220 from the LMC 215, or manage the concurrent location request in a way that is compatible with the positioning operation at the LMC 215.

The LMF 203 may perform a procedure 462 to obtain the location information of terminal device 120 to handle the concurrent location request. In some example embodiments, the LMF 203 may fetch the latest available location information of the terminal device 220 from the LMC 215, if the ongoing location session has appropriate attributes in terms of e.g. accuracy, expected age, etc., similarly as described below with respect to the procedure 450. Then, the LMC 215 provides the already available location information of the terminal device 220 to the LMF 203.

As an example process, the LMF 203 may determine, based on the location management information and the concurrent location request, whether an attribute included in the concurrent location request matches a corresponding attribute of the positioning operation. For example, the LMF 203 may determine whether the internal location request at the RAN 201 has a same or similar positioning accuracy with the concurrent location request. If the LMF 203 determines that the attribute included in the concurrent location request matches the corresponding attribute of the positioning operation, for example, if the LMF 203 determines that the internal location request at the RAN 201 has a same positioning accuracy with the concurrent location request, the LMF 203 may transmit to the RAN 201 a request for the location information of the terminal device 220. The RAN 201 may provide the LMF 203 with the location information of terminal device 220 which has been determined.

In some example embodiments, the LMF 203 may handle the concurrent location request (e.g., MT-LR) in an independent way that does not conflict with the positioning operation at the LMC 215. For example, the LMF 203 may perform a further positioning operation to handle this concurrent location request, in order to determine the location information of the terminal device 220. The further positioning operation is compatible with the positioning operation being performed at the RAN 201. The further positioning operation may be selected from a variety of positioning methods, such as those mentioned above. Such example embodiments may make sense if the concurrent location request (e.g., MT-LR) does not require high accuracy, and thus the LMF 203 is able to handle the concurrent location request using for example E-CID that does not conflict with radio configurations being used by the LMC 215.

After obtaining the location information of the terminal device 220 (received from the RAN 201 in some example embodiments, or determined using a positioning method), the response to the concurrent location request is generated based on the location information by the LMF 203 and transmitted 464 to the AMF 202. The AMF 202 then transmits 466 to the LCS entity 401 the response to the concurrent location request.

The AMF 202 may select the LMF 203 to handle the concurrent location request when the concurrent location request does not require low latency. Such example embodiments can achieve many advantages. For example, since the concurrent location request is directly transferred to the LMF, no new functionality is required for the AMF. In other words, functional impact on the AMF can be minimized. Such example embodiments enables the LMC in the RAN to be used only for location requests that require high level QoS (e.g. low latency), while less demanding location requests continue to be served by LMFs in the core network. In this way, the limited resources (e.g. processing power) at the RAN (e.g. the NG-RAN) can be utilized in an efficient way to handle high demanding location requests.

In some example embodiments, if the positioning operation is terminated or the internal location request has been handled, the RAN 201 may transmit 470 to the AMF 202 an indication that the positioning operation is terminated. For example, the RAN 201 may transmit the "stop" state indication to the AMF 202, as mentioned above. The AMF 202 then updates 475 the location management information stored in the context of the terminal device 220. In the case where the concurrent location request for the terminal device 220 is being handled by the LMF 203, the AMF 202 may further forward 480 this "stop" state indication to the LMF 203, which can in turn adapt the handling of the concurrent location request if needed.

In some example embodiments, when the positioning operation is terminated, the location estimation (if requested by the AMF 202) of the terminal device 220 and information about other location service request(s) that were being handled by the LMC 215 (e.g., MT-LR) can also be transmitted to the AMF 202, for example, along with the "stop" state indication. The AMF 202 may then determine whether to transfer the location session for handling the other location request(s) from the LMC 215 to the LMF 203, for example, based on local policy, load status, etc..

As an example, while a location session for obtaining the location information requested by the concurrent location request is activated between the RAN 201 and the AMF 202, for example during the actions as shown in the block 411 or block 412, the AMF 202 receives from the RAN 201 an indication that the positioning operation for the terminal device 220 is terminated at the RAN 201. The AMF 202 may deactivate this location session and transmit the concurrent location request to an LMF (e.g. the LMF 203) to enable the LMF to determine the location information. As such, the location session for handling the concurrent location request is transferred from the RAN 201 to the LMF.

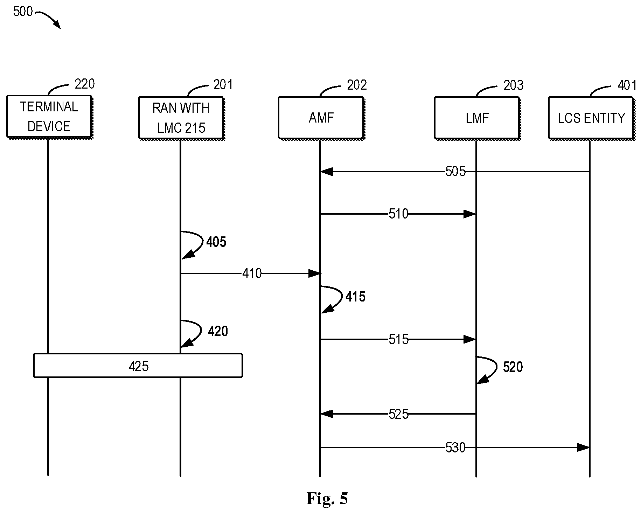

It is to be noted that in Fig. 4 the location request from the LCS entity 401 is shown to be received after the location management information only for purpose of illustration without any limitation on the scope of the present disclosure. In some example embodiments, the concurrent location request from the LCS entity 401 (e.g., MO-LR, MT-LR, NI-LR) may be received before the location management information. Such example embodiments will be described with reference to Fig. 5.

Fig. 5 illustrates a flowchart illustrating an example process 500 for handling concurrent location requests according to some embodiments of the present disclosure. For the purpose of discussion, the process 500 will be described with reference to Fig. 2. The process 500 may involve the terminal device 220, the RAN 201, the AMF 202, and the LMF 203 as illustrated in Fig. 2 and the LCS entity 401 as shown in Fig. 4. Although the process 500 is described with respect to the RAN 201, in some example embodiments, the actions described with respect to the RAN 201 may be specifically implemented at a network device in the RAN 201. For example, in the case where the LMC 215 is implemented within the network device 210, the actions may be implemented at the network device 210. In the case where the LMC 215 is implemented as a further network device separated from the network device 210, the actions may be implemented at the further network device.

The actions with the same reference signs (405, 410, 415, 420, 425) as those in Fig. 4 are similar with the corresponding actions described above with reference to Fig. 4 and thus description thereof will not be repeated. As shown in Fig. 5, before receiving the location management information from the RAN 201, the AMF 202 receives 505, from the LCS entity 401, a location request for a location of the terminal device 220, which will be referred to a concurrent location request hereinafter. Then, the AMF 202 transmits 510 the concurrent location request to the LMF 203 for handling by the LMF 203.

In such a case, when receiving from the RAN 201 the location management information, an active location session for the terminal device 220 already exists in the LMF 203. In addition to storing 415 the location management information in the context of the terminal device 220, the AMF 202 may forward the location management information to the LMF 203. For example, if the AMF 202 determines that the concurrent location request has been transmitted to the LMF 203, which means an active location session for the terminal device 220 existing in the LMF 203, the AMF 202 transmits 515 the location management information to the LMF 203.

The LMF 203 adapts 520 the handling of the concurrent location request based on the location management information. For example, the LMF 203 may fetch the location information of the terminal device 220 from the RAN 202 or may handle the concurrent location request in a way that does not conflict with the LMC 215, as described above with respect to the block 413 of Fig. 4. After obtaining the location information of the terminal device 220, the response to the concurrent location request is generated and transmitted 525 to the AMF 202 by the LMF 203. The AMF 202 then transmits 530 to the LCS entity 401 the response to the concurrent location request.

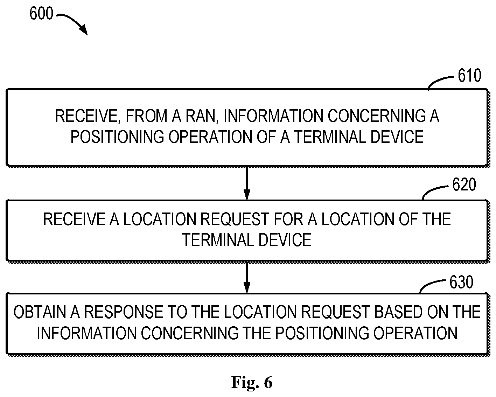

More details of the example embodiments in accordance with the present disclosure will be described with reference to Figs. 6-8.

Fig. 6 shows a flowchart of an example method 600 according to some example embodiments of the present disclosure. The method 600 can be implemented at any suitable device. For example, the method 600 can be implemented at a device in the core network, e.g. at the AMF 202 as shown in Fig. 2. For the purpose of discussion, the method 600 will be described with reference to Fig. 2.

At block 610, the AMF 202 receives, from the RAN 201, information concerning a positioning operation of a terminal device 220, wherein the positioning operation is performed at the RAN 201. At block 620, the AMF 202 receives a location request for a location of the terminal device 220. At block 630, the AMF 202 obtains a response to the location request based on the information concerning the positioning operation, the response including location information of the terminal device 220.

In some example embodiments, the information concerning the positioning operation comprises one or more of the following: accuracy required for the positioning operation, a response time required for the positioning operation, a type of location required for the positioning operation, or a type of event triggering the positioning operation.

In some example embodiments, obtaining the response comprises: transmitting the information concerning the positioning operation and the location request to the LMF 203 to enable the LMF 203 to obtain the location information based on the information; and receiving, from the LMF 203, the response to the location request.

In some example embodiments, the information concerning the positioning operation is received before the location request, and wherein the transmitting comprises: determining, based on the information concerning the positioning operation, whether the positioning operation is being performed at the RAN 201; and in response to a determination that the positioning operation is being performed at the RAN 201, transmitting the location request along with the information concerning the positioning operation to the LMF 203.

In some example embodiments, the information concerning the positioning operation is received after the location request and the transmitting comprises: transmitting the location request to the LMF 203; and in response to a determination that the location request has been transmitted, transmitting the information concerning the positioning operation to the LMF 203.

In some example embodiments, obtaining the response comprises: determining, based on the information concerning the positioning operation, whether the positioning operation is being performed at the RAN 201; in response to a determination that the positioning operation is being performed at the RAN 201, transmitting the location request to the RAN 201 to enable the RAN 201 to determine the location information; and receiving, from the RAN 201, the response to the location request.

In some example embodiments, obtaining the response comprises: determining, based on the information and the location request, whether an attribute included in the location request matches a corresponding attribute of the positioning operation; in response to a determination that the attribute included in the location request matches the corresponding attribute of the positioning operation, transmitting to the RAN 201 a request for the location information of the terminal device 220; receiving the location information from the RAN 201; and generating the response to the location request based on the received location information

In some example embodiments, obtaining the response comprises: while a session for obtaining the response is activated between the RAN 201 and the AMF 202, receiving from the RAN 201 an indication that the positioning operation is terminated at the RAN 201; deactivating the session for obtaining the response; transmitting the location request to a LMF 203 to enable the LMF 203 to determine the location information; and receiving, from the LMF 203, the response to the location request.

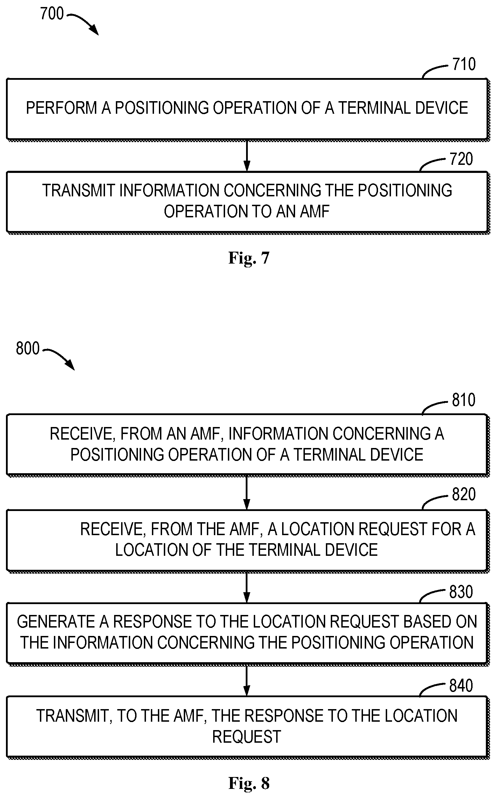

Fig. 7 shows a flowchart of an example method 700 according to some example embodiments of the present disclosure. The method 700 can be implemented at any suitable device. For example, the method 700 can be implemented at the RAN 201 as shown in Fig. 2. For the purpose of discussion, the method 700 will be described with reference to Fig. 2. It is to be noted that the method 700 may be implemented specifically at a network device in the RAN 201, which incorporates the LMC.

At block 710, the RAN 201 performs a positioning operation of a terminal device 220. The positioning operation may be triggered locally in the RAN 201, for example, may be responsive to a RI-LR. At block 720, the RAN 201 transmits information concerning the positioning operation to an AMF 202, to enable the AMF 202 to obtain a response to a location request for a location of the terminal device 220 based on the information concerning the positioning operation, the response including location information of the terminal device 220.

In some example embodiments, the information concerning the positioning operation comprises one or more of the following: accuracy required for the positioning operation, a response time required for the positioning operation, a type of location required for the positioning operation, or a type of event triggering the positioning operation.

In some example embodiments, the method 700 further comprises: in response to receiving the location request from the AMF 202, determining the location information of the terminal device 220; generating the response to the location request based on the location information; and transmitting to the AMF 202 the response to the location request.

In some example embodiments, determining the location information of the terminal device 220 comprises: performing a further positioning operation compatible with the positioning operation.

In some example embodiments, the method 700 further comprises receiving from the AMF 202 a request for the location information of the terminal device 220; and transmitting to the AMF 202 the location information having been determined at the RAN 201.

In some example embodiments, the method 700 further comprises: receiving the location request from the AMF 202; in response to the positioning operation being terminated, transmitting to the AMF 202 an indication that the positioning operation is terminated; and transmitting the location request back to the AMF 202.

Fig. 8 shows a flowchart of an example method 800 according to some example embodiments of the present disclosure. The method 800 can be implemented at a device in the core network for example at the LMF 203 as shown in Fig. 2. For the purpose of discussion, the method 800 will be described with reference to Fig. 2.

At block 810, the LMF 203 receives, from an AMF 202, information concerning a positioning operation of a terminal device 220, wherein the positioning operation is performed at a RAN 201. At block 820, the LMF 203 receives, from the AMF 202, a location request for a location of the terminal device 220. At block 830, the LMF 203 generates a response to the location request based on the information concerning the positioning operation, the response including location information of the terminal device 220. At block 840, LMF 203 transmits, to the AMF 202, the response to the location request.

In some example embodiments, the information concerning the positioning operation comprises one or more of the following: accuracy required for the positioning operation, a response time required for the positioning operation, a type of location required for the positioning operation, or a type of event triggering the positioning operation.

In some example embodiments, generating the response comprises: determining the location information by performing a further positioning operation of the terminal device 220, the further positioning operation being compatible with the positioning operation at the RAN 201; and generating the response to the location request based on the determined location information.

In some example embodiments, generating the response comprises: determining, based on the information and the location request, whether an attribute included in the location request matches a corresponding attribute of the positioning operation; in response to a determination that the attribute included in the location request matches the corresponding attribute of the positioning operation, transmitting to the RAN 201 a request for the location information of the terminal device 220; receiving the location information from the RAN 201; and generating the response to the location request based on the received location information.

In some example embodiments, an apparatus capable of performing the method 600 may comprise means for performing the respective steps of the method 600. The means may be implemented in any suitable form. For example, the means may be implemented in a circuitry or software module.

In some example embodiments, the apparatus comprises: means for receiving, at a first network device from a second network device, information concerning a positioning operation of a terminal device, wherein the positioning operation is performed at the second network device; means for receiving a location request for a location of the terminal device; and means for obtaining a response to the location request based on the information concerning the positioning operation, the response including location information of the terminal device.

In some example embodiments, the information concerning the positioning operation comprises one or more of the following: accuracy required for the positioning operation, a response time required for the positioning operation, a type of location required for the positioning operation, or a type of event triggering the positioning operation.

In some example embodiments, the means for obtaining the response comprises: means for transmitting the information concerning the positioning operation and the location request to a third network device to enable the third network device to obtain the location information based on the information; and means for receiving, from the third network device, the response to the location request.

In some example embodiments, the information concerning the positioning operation is received before the location request, and wherein the means for transmitting comprises: means for determining, based on the information concerning the positioning operation, whether the positioning operation is being performed at the second network device; and means for in response to a determination that the positioning operation is being performed at the second network device, transmitting the location request along with the information concerning the positioning operation to the third network device.

In some example embodiments, the information concerning the positioning operation is received after the location request and the means for transmitting comprises: means for transmitting the location request to the third network device; and means for in response to a determination that the location request has been transmitted, transmitting the information concerning the positioning operation to the third network device.

In some example embodiments, the means for obtaining the response comprises: means for determining, based on the information concerning the positioning operation, whether the positioning operation is being performed at the second network device; means for in response to a determination that the positioning operation is being performed at the second network device, transmitting the location request to the second network device to enable the second network device to determine the location information; and means for receiving, from the second network device, the response to the location request

In some example embodiments, the means for obtaining the response comprises: means for determining, based on the information and the location request, whether an attribute included in the location request matches a corresponding attribute of the positioning operation; means for in response to a determination that the attribute included in the location request matches the corresponding attribute of the positioning operation, transmitting to the second network device a request for the location information of the terminal device; means for receiving the location information from the second network device; and means for generating the response to the location request based on the received location information.

In some example embodiments, the means for obtaining the response comprises: means for while a session for obtaining the response is activated between the second network device and the first network device, receiving from the second network device an indication that the positioning operation is terminated at the second network device; means for deactivating the session for obtaining the response; means for transmitting the location request to a third network device to enable the third network device to determine the location information; and means for receiving, from the third network device, the response to the location request.

In some example embodiments, the apparatus comprises an access and mobility management function, AMF.

In some example embodiments, an apparatus capable of performing the method 700 may comprise means for performing the respective steps of the method 700. The means may be implemented in any suitable form. For example, the means may be implemented in a circuitry or software module.

In some example embodiments, the apparatus comprises: means for performing, at a second network device, a positioning operation of a terminal device; and means for transmitting information concerning the positioning operation to a first network device, to enable the first network device to obtain a response to a location request for a location of the terminal device based on the information concerning the positioning operation, the response including location information of the terminal device.

In some example embodiments, the information concerning the positioning operation comprises one or more of the following: accuracy required for the positioning operation, a response time required for the positioning operation, a type of location required for the positioning operation, or a type of event triggering the positioning operation.

In some example embodiments, the apparatus further comprises: means for in response to receiving the location request from the first network device, determining the location information of the terminal device; means for generating the response to the location request based on the location information; and means for transmitting to the first network device the response to the location request.

In some example embodiments, the means for determining the location information of the terminal device comprises: means for performing a further positioning operation compatible with the positioning operation.

In some example embodiments, the apparatus further comprises means for receiving from the first network device a request for the location information of the terminal device; and means for transmitting to the first network device the location information having been determined at the second network device.

In some example embodiments, the apparatus further comprises: means for receiving the location request from the first network device; and means for in response to the positioning operation being terminated, transmitting to the first network device an indication that the positioning operation is terminated and transmitting the location request back to the first network device.

In some example embodiments, the apparatus comprises a location management component, LMC.

In some example embodiments, an apparatus capable of performing the method 800 may comprise means for performing the respective steps of the method 800. The means may be implemented in any suitable form. For example, the means may be implemented in a circuitry or software module.

In some example embodiments, the apparatus comprises: means for receiving, at a third network device from a first network device, information concerning a positioning operation of a terminal device, wherein the positioning operation is performed at a second network device; means for receiving, from the first network device, a location request for a location of the terminal device; means for generating a response to the location request based on the information concerning the positioning operation, the response including location information of the terminal device; and means for transmitting, to the first network device, the response to the location request.

In some example embodiments, the information concerning the positioning operation comprises one or more of the following: accuracy required for the positioning operation, a response time required for the positioning operation, a type of location required for the positioning operation, or a type of event triggering the positioning operation.

In some example embodiments, the means for generating the response comprises: means for determining the location information by performing a further positioning operation of the terminal device, the further positioning operation being compatible with the positioning operation at the second network device; and means for generating the response to the location request based on the determined location information.

In some example embodiments, the means for generating the response comprises: means for determining, based on the information and the location request, whether an attribute included in the location request matches a corresponding attribute of the positioning operation; means for in response to a determination that the attribute included in the location request matches the corresponding attribute of the positioning operation, transmitting to the second network device a request for the location information of the terminal device; means for receiving the location information from the second network device; and means for generating the response to the location request based on the received location information.

In some example embodiments, the apparatus comprises a location management function, LMF.

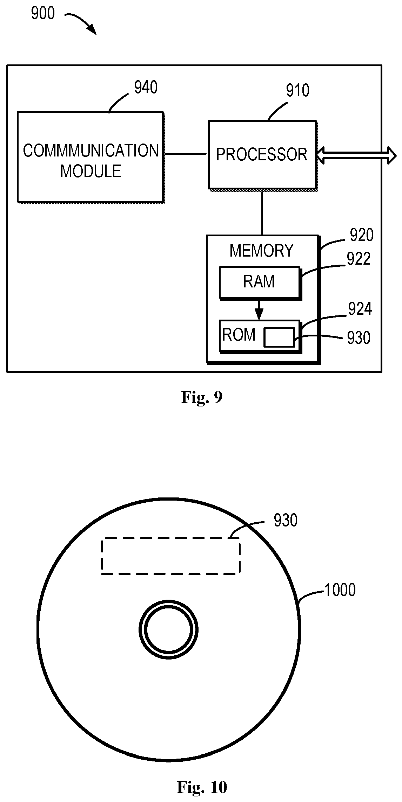

Fig. 9 is a simplified block diagram of a device 900 that is suitable for implementing embodiments of the present disclosure. The device 900 may be provided to implement the communication device, for example the network device 210 or the AMF 202, the LMF 203 as shown in Fig. 1. As shown, the device 900 includes one or more processors 910, one or more memories 920 coupled to the processor 910, and one or more communication modules 940 coupled to the processor 910.

The communication module 940 is for bidirectional communications. The communication module 940 has at least one antenna to facilitate communication. The communication interface may represent any interface that is necessary for communication with other network elements.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 1200 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The program 930 may be stored in the ROM 920. The processor 910 may perform any suitable actions and processing by loading the program 930 into the RAM 920.

The embodiments of the present disclosure may be implemented by means of the program 930 so that the device 900 may perform any process of the disclosure as discussed with reference to Figs. 6 to 8. The embodiments of the present disclosure may also be implemented by hardware or by a combination of software and hardware.

In some embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. The computer readable medium may include any types of tangible non-volatile storage, such as ROM, EPROM, a flash memory, a hard disk, CD, DVD, and the like. Fig. 10 shows an example of the computer readable medium 1000 in form of CD or DVD. The computer readable medium has the program 930 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 600, 700 or 800 as described above with reference to Figs. 6-8. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first network device (202), comprising:
at least one processor (910); and
at least one memory (920) including computer program codes;
the at least one memory (920) and the computer program codes are configured to, with the at least one processor (910), cause the first network device (202) at least to:
receive, from a second network device (215), information concerning a positioning operation of a terminal device (220), wherein the positioning operation is performed at the second network device (215);
receive a location request for a location of the terminal device (220);
**characterised in that** the at least one memory (920) and the computer program codes are configured to, with the at least one processor (910), cause the first network device at least to further:
make a determination about which of the first network device (202), the second network device (215) and a third network device (203) is to handle the location request; and
obtain a response to the location request based on the information concerning the positioning operation, the response including location information of the terminal device (220), wherein, based on the determination which of the first network device (202), the second network device (215) and the third network device (203) is to handle the location request, the response is generated by the first network device (202) or received by the first network device (202) from the second network device (215) or received by the first network device (202) from the third network device (203), respectively.

2. The first network device (202) of Claim 1, wherein the information concerning the positioning operation comprises one or more of the following:
accuracy required for the positioning operation,
a response time required for the positioning operation,
a type of location required for the positioning operation, or
a type of event triggering the positioning operation.

3. The first network device (202) of Claim 1, wherein the first network device (202) is caused to obtain the response by:
transmitting the information concerning the positioning operation and the location request to the third network device (203) to enable the third network device (203) to obtain the location information based on the information; and
receiving, from the third network device (203), the response to the location request.

4. The first network device (202) of Claim 3, wherein the information concerning the positioning operation is received before the location request, and wherein the transmitting comprises:
determining, based on the information concerning the positioning operation, whether the positioning operation is being performed at the second network device (215); and
in response to a determination that the positioning operation is being performed at the second network device (215), transmitting the location request along with the information concerning the positioning operation to the third network device (203).

5. The first network device (202) of Claim 3, wherein the information concerning the positioning operation is received after the location request and the transmitting comprises:
transmitting the location request to the third network device (203); and
in response to a determination that the location request has been transmitted, transmitting the information concerning the positioning operation to the third network device (203).

6. The first network device (202) of Claim 1, wherein the first network device (202) is caused to obtain the response by:
determining, based on the information concerning the positioning operation, whether the positioning operation is being performed at the second network device (215);
in response to a determination that the positioning operation is being performed at the second network device (215), transmitting the location request to the second network device (215) to enable the second network device (215) to determine the location information; and
receiving, from the second network device (215), the response to the location request.

7. The first network device (202) of Claim 1, wherein the first network device (202) is caused to obtain the response by:
determining, based on the information and the location request, whether an attribute included in the location request matches a corresponding attribute of the positioning operation;
in response to a determination that the attribute included in the location request matches the corresponding attribute of the positioning operation, transmitting to the second network device (215) a request for the location information of the terminal device (220);
receiving the location information from the second network device (215); and
generating the response to the location request based on the received location information.

8. The first network device (202) of Claim 1, wherein the first network device (202) is caused to obtain the response by:
while a session for obtaining the response is activated between the second network device (215) and the first network device (202), receiving from the second network device (215) an indication that the positioning operation is terminated at the second network device (215);
deactivating the session for obtaining the response;
transmitting the location request to a third network device (203) to enable the third network device (203) to determine the location information; and
receiving, from the third network device (203), the response to the location request.

9. The first network device (202) of Claim 1, wherein the first network device (202) comprises an access and mobility management function, AMF (202).

10. A method, comprising:
receiving, at a first network device (202) from a second network device (215), information concerning a positioning operation of a terminal device (220), wherein the positioning operation is performed at the second network device (215);
receiving a location request for a location of the terminal device (220);
**characterised in that** the method further comprises the steps of:
making a determination about which of the first network device (202), the second network device (215) and a third network device (203) is to handle the location request; and
obtaining a response to the location request based on the information concerning the positioning operation, the response including location information of the terminal device (220), wherein, based on the determination which of the first network device (202), the second network device (215) and the third network device (203) is to handle the location request, the response is generated by the first network device (202) or received by the first network device (202) from the second network device (215) or received by the first network device (202) from the third network device (203), respectively.

## Patentansprüche

1. Erste Netzwerkvorrichtung (202), die Folgendes umfasst:
mindestens einen Prozessor (910); und
mindestens einen Speicher (920), der Computerprogrammcodes beinhaltet;
wobei der mindestens eine Speicher (920) und die Computerprogrammcodes dazu ausgelegt sind, die erste Netzwerkvorrichtung (202) mit dem mindestens einen Prozessor (910) mindestens zu Folgendem zu veranlassen:
Empfangen von Informationen, die sich auf eine Positionsbestimmungsoperation einer Endgerätevorrichtung (220) beziehen, von einer zweiten Netzwerkvorrichtung (215), wobei die Positionsbestimmungsoperation an der zweiten Netzwerkvorrichtung (215) durchgeführt wird;
Empfangen einer Standortanforderung eines Standorts der Endgerätevorrichtung (220);
**dadurch gekennzeichnet, dass** der mindestens eine Speicher (920) und die Computerprogrammcodes dazu ausgelegt sind, die erste Netzwerkvorrichtung mit dem mindestens einen Prozessor (910) ferner mindestens zu Folgendem zu veranlassen:
Vornehmen einer Bestimmung dazu, welche der ersten Netzwerkvorrichtung (202), der zweiten Netzwerkvorrichtung (215) und einer dritten Netzwerkvorrichtung (203) die Standortanforderung handhaben soll; und
Erhalten einer Antwort auf die Standortanforderung auf Basis der Informationen, die sich auf die Positionsbestimmungsoperation beziehen, wobei die Antwort Standortinformationen der Endgerätevorrichtung (220) beinhaltet, wobei auf Basis der Bestimmung, welche der ersten Netzwerkvorrichtung (202), der zweiten Netzwerkvorrichtung (215) und der dritten Netzwerkvorrichtung (203) die Standortanforderung handhaben soll, die Antwort von der ersten Netzwerkvorrichtung (202) erzeugt wird oder von der ersten Netzwerkvorrichtung (202) von der zweiten Netzwerkvorrichtung (215) empfangen wird bzw. von der ersten Netzwerkvorrichtung (202) von der dritten Netzwerkvorrichtung (203) empfangen wird.

2. Erste Netzwerkvorrichtung (202) nach Anspruch 1, wobei die Informationen, die sich auf die Positionsbestimmungsoperation beziehen, eines oder mehreres von Folgendem umfassen:
einer für die Positionsbestimmungsoperation erforderlichen Genauigkeit,
einer für die Positionsbestimmungsoperation erforderlichen Reaktionszeit,
einer für die Positionsbestimmungsoperation erforderlichen Standortart, oder
einer für die Positionsbestimmungsoperation erforderlichen Ereignisauslösungsart.

3. Erste Netzwerkvorrichtung (202) nach Anspruch 1, wobei die erste Netzwerkvorrichtung (202) veranlasst wird, die Antwort durch Folgendes zu erhalten:
Übertragen der Informationen, die sich auf die Positionsbestimmungsoperation beziehen, und der Standortanforderung zur dritten Netzwerkvorrichtung (203), um es der dritten Netzwerkvorrichtung (203) zu ermöglichen, die Standortinformationen auf Basis der Informationen zu erhalten; und
Empfangen der Antwort auf die Standortanforderung von der dritten Netzwerkvorrichtung (203).

4. Erste Netzwerkvorrichtung (202) nach Anspruch 3, wobei die Informationen, die sich auf die Positionsbestimmungsoperation beziehen, vor der Standortanforderung empfangen werden, und wobei das Übertragen Folgendes umfasst:
Bestimmen auf Basis der Informationen, die sich auf die Positionsbestimmungsoperation beziehen, ob die Positionsbestimmungsoperation an der zweiten Netzwerkvorrichtung (215) durchgeführt wird; und
in Reaktion auf eine Bestimmung, dass die Positionsbestimmungsoperation an der zweiten Netzwerkvorrichtung (215) durchgeführt wird, Übertragen der Standortanforderung zusammen mit den Informationen, die sich auf die Positionsbestimmungsoperation beziehen, zur dritten Netzwerkvorrichtung (203).

5. Erste Netzwerkvorrichtung (202) nach Anspruch 3, wobei die Informationen, die sich auf die Positionsbestimmungsoperation beziehen, nach der Standortanforderung empfangen werden und das Übertragen Folgendes umfasst:
Übertragen der Standortanforderung zur dritten Netzwerkvorrichtung (203); und
in Reaktion auf eine Bestimmung, dass die Standortanforderung übertragen wurde, Übertragen der Informationen, die sich auf die Positionsbestimmungsoperation beziehen, zur dritten Netzwerkvorrichtung (203).

6. Erste Netzwerkvorrichtung (202) nach Anspruch 1, wobei die erste Netzwerkvorrichtung (202) veranlasst wird, die Antwort durch Folgendes zu erhalten:
Bestimmen auf Basis der Informationen, die sich auf die Positionsbestimmungsoperation beziehen, ob die Positionsbestimmungsoperation an der zweiten Netzwerkvorrichtung (215) durchgeführt wird;
in Reaktion auf eine Bestimmung, dass die Positionsbestimmungsoperation an der zweiten Netzwerkvorrichtung (215) durchgeführt wird, Übertragen der Standortanforderung zur zweiten Netzwerkvorrichtung (215), um es der zweiten Netzwerkvorrichtung (215) zu ermöglichen, die Standortinformationen zu bestimmen; und
Empfangen der Antwort auf die Standortanforderung von der zweiten Netzwerkvorrichtung (215).

7. Erste Netzwerkvorrichtung (202) nach Anspruch 1, wobei die erste Netzwerkvorrichtung (202) veranlasst wird, die Antwort durch Folgendes zu erhalten:
Bestimmen auf Basis der Informationen und der Standortanforderung, ob ein Attribut, das in der Standortanforderung beinhaltet ist, mit einem entsprechenden Attribut der Positionsbestimmungsoperation übereinstimmt;
in Reaktion auf eine Bestimmung, dass das Attribut, das in der Standortanforderung beinhaltet ist, mit dem entsprechenden Attribut der Positionsbestimmungsoperation übereinstimmt, Übertragen einer Anforderung der Standortinformationen der Endgerätevorrichtung (220) zur zweiten Netzwerkvorrichtung (215);
Empfangen der Standortinformationen von der zweiten Netzwerkvorrichtung (215); und
Erzeugen der Antwort auf die Standortanforderung auf Basis der empfangenen Standortinformationen.

8. Erste Netzwerkvorrichtung (202) nach Anspruch 1, wobei die erste Netzwerkvorrichtung (202) veranlasst wird, die Antwort durch Folgendes zu erhalten:
Empfangen einer Anzeige, dass die Positionsbestimmungsoperation an der zweiten Netzwerkvorrichtung (215) abgeschlossen ist, von der zweiten Netzwerkvorrichtung (215), während eine Sitzung zum Erhalten der Antwort zwischen der zweiten Netzwerkvorrichtung (215) und der ersten Netzwerkvorrichtung (202) aktiviert wird;
Deaktivieren der Sitzung zum Erhalten der Antwort;
Übertragen der Standortanforderung zu einer dritten Netzwerkvorrichtung (203), um es der dritten Netzwerkvorrichtung (203) zu ermöglichen, die Standortinformationen zu bestimmen; und
Empfangen der Antwort auf die Standortanforderung von der dritten Netzwerkvorrichtung (203).

9. Erste Netzwerkvorrichtung (202) nach Anspruch 1, wobei die erste Netzwerkvorrichtung (202) eine Zugangs- und Mobilitätsverwaltungsfunktion, AMF (202), umfasst.

10. Verfahren, das Folgendes umfasst:
Empfangen von Informationen, die sich auf eine Positionsbestimmungsoperation einer Endgerätevorrichtung (220) beziehen, an einer ersten Netzwerkvorrichtung (202) von einer zweiten Netzwerkvorrichtung (215), wobei die Positionsbestimmungsoperation an der zweiten Netzwerkvorrichtung (215) durchgeführt wird;
Empfangen einer Standortanforderung eines Standorts der Endgerätevorrichtung (220);
**dadurch gekennzeichnet, dass** das Verfahren ferner die folgenden Schritte umfasst:
Vornehmen einer Bestimmung dazu, welche der ersten Netzwerkvorrichtung (202), der zweiten Netzwerkvorrichtung (215) und einer dritten Netzwerkvorrichtung (203) die Standortanforderung handhaben soll; und
Erhalten einer Antwort auf die Standortanforderung auf Basis der Informationen, die sich auf die Positionsbestimmungsoperation beziehen, wobei die Antwort Standortinformationen der Endgerätevorrichtung (220) beinhaltet, wobei auf Basis der Bestimmung, welche der ersten Netzwerkvorrichtung (202), der zweiten Netzwerkvorrichtung (215) und der dritten Netzwerkvorrichtung (203) die Standortanforderung handhaben soll, die Antwort von der ersten Netzwerkvorrichtung (202) erzeugt wird oder von der ersten Netzwerkvorrichtung (202) von der zweiten Netzwerkvorrichtung (215) empfangen wird bzw. von der ersten Netzwerkvorrichtung (202) von der dritten Netzwerkvorrichtung (203) empfangen wird.

## Revendications

1. Premier dispositif de réseau (202), comprenant :
au moins un processeur (910) ; et
au moins une mémoire (920) comportant des codes de programme informatique ;
l'au moins une mémoire (920) et les codes de programme informatique sont configurés pour, avec l'au moins un processeur (910), amener le premier dispositif de réseau (202) au moins :
recevoir d'un deuxième dispositif de réseau (215) des informations concernant une opération de positionnement d'un dispositif terminal (220), dans lequel l'opération de positionnement est effectuée au niveau du deuxième dispositif de réseau (215) ;
recevoir une demande d'emplacement concernant l'emplacement du dispositif terminal (220) ;
**caractérisé en ce que** l'au moins une mémoire (920) et les codes de programme informatique sont configurés pour, avec l'au moins un processeur (910), amener en outre le premier dispositif de réseau à au moins :
faire une détermination précisant lequel parmi le premier dispositif de réseau (202), le deuxième dispositif de réseau (215) et un troisième dispositif de réseau (203) doit traiter la demande d'emplacement ; et
obtenir une réponse à la demande d'emplacement sur la base des informations concernant l'opération de positionnement, la réponse comportant des informations d'emplacement du dispositif terminal (220), dans lequel, sur la base de la détermination précisant lequel parmi le premier dispositif de réseau (202), le deuxième dispositif de réseau (215) et le troisième dispositif de réseau (203) doit traiter la demande d'emplacement, la réponse est générée par le premier dispositif de réseau (202), reçue par le premier dispositif de réseau (202) en provenance du deuxième dispositif de réseau (215) ou reçue par le premier dispositif de réseau (202) en provenance du troisième dispositif de réseau (203), respectivement.

2. Premier dispositif de réseau (202) de la revendication 1, dans lequel les informations concernant l'opération de positionnement comprennent un ou plusieurs des éléments suivants :
une précision requise pour l'opération de positionnement,
un temps de réponse requis pour l'opération de positionnement,
un type d'emplacement requis pour l'opération de positionnement, ou
un type d'événement déclenchant l'opération de positionnement.

3. Premier dispositif de réseau (202) de la revendication 1, dans lequel le premier dispositif de réseau (202) est amené à obtenir la réponse :
en transmettant les informations concernant l'opération de positionnement et la demande d'emplacement au troisième dispositif de réseau (203) pour permettre au troisième dispositif de réseau (203) d'obtenir les informations d'emplacement sur la base des informations ; et
en recevant la réponse à la demande d'emplacement en provenance du troisième dispositif de réseau (203).

4. Premier dispositif de réseau (202) de la revendication 3, dans lequel les informations concernant l'opération de positionnement sont reçues avant la demande d'emplacement, et dans lequel la transmission comprend :
le fait de déterminer si l'opération de positionnement est en cours d'exécution au niveau du deuxième dispositif de réseau (215), sur la base des informations concernant l'opération de positionnement ; et
en réponse à la détermination du fait que l'opération de positionnement est en cours d'exécution au niveau du deuxième dispositif de réseau (215), la transmission de la demande d'emplacement ainsi que des informations concernant l'opération de positionnement au troisième dispositif de réseau (203).

5. Premier dispositif de réseau (202) de la revendication 3, dans lequel les informations concernant l'opération de positionnement sont reçues après la demande d'emplacement, et la transmission comprend :
la transmission de la demande d'emplacement au troisième dispositif de réseau (203) ; et
en réponse à la détermination du fait que la demande d'emplacement a été transmise, la transmission des informations concernant l'opération de positionnement au troisième dispositif de réseau (203).

6. Premier dispositif de réseau (202) de la revendication 1, dans lequel le premier dispositif de réseau (202) est amené à obtenir la réponse :
en déterminant si l'opération de positionnement est en cours d'exécution au niveau du deuxième dispositif de réseau (215), sur la base des informations concernant l'opération de positionnement ;
en réponse à la détermination du fait que l'opération de positionnement est en cours d'exécution au niveau du deuxième dispositif de réseau (215), en transmettant la demande d'emplacement au deuxième dispositif de réseau (215) pour permettre au deuxième dispositif de réseau (215) de déterminer les informations d'emplacement ; et
en recevant la réponse à la demande d'emplacement en provenance du deuxième dispositif de réseau (215).

7. Premier dispositif de réseau (202) de la revendication 1, dans lequel le premier dispositif de réseau (202) est amené à obtenir la réponse :
en déterminant si un attribut inclus dans la demande d'emplacement est concordant avec un attribut correspondant de l'opération de positionnement, sur la base des informations et de la demande d'emplacement ;
en réponse à la détermination du fait que l'attribut inclus dans la demande d'emplacement est concordant avec l'attribut correspondant de l'opération de positionnement, en transmettant au deuxième dispositif de réseau (215) une demande concernant les informations d'emplacement du dispositif terminal (220) :;;
en recevant les informations d'emplacement en provenance du deuxième dispositif de réseau (215) ; et
en générant la réponse à la demande d'emplacement sur la base des informations d'emplacement reçues.

8. Premier dispositif de réseau (202) de la revendication 1, dans lequel le premier dispositif de réseau (202) est amené à obtenir la réponse :
pendant qu'une session pour obtenir la réponse est activée entre le deuxième dispositif de réseau (215) et le premier dispositif de réseau (202), en recevant en provenance du deuxième dispositif de réseau (215) une indication selon laquelle l'opération de positionnement est terminée au niveau du deuxième dispositif de réseau (215) ;
en désactivant la session pour obtenir la réponse ;
en transmettant la demande d'emplacement à un troisième dispositif de réseau (203) pour permettre au troisième dispositif de réseau (203) de déterminer les informations d'emplacement ; et
en recevant la réponse à la demande d'emplacement en provenance du troisième dispositif de réseau (203).

9. Premier dispositif de réseau (202) de la revendication 1, dans lequel le premier dispositif de réseau (202) comprend une fonction de gestion de l'accès et de la mobilité, AMF (202).

10. Procédé, comprenant les étapes suivantes :
recevoir, au niveau d'un premier dispositif de réseau (202) en provenance d'un deuxième dispositif de réseau (215), des informations concernant une opération de positionnement d'un dispositif terminal (220), dans lequel l'opération de positionnement est effectuée au niveau du deuxième dispositif de réseau (215) ;
recevoir une demande d'emplacement concernant l'emplacement du dispositif terminal (220) ;
**caractérisé en ce que** le procédé comprend en outre les étapes suivantes :
faire une détermination précisant lequel parmi le premier dispositif de réseau (202), le deuxième dispositif de réseau (215) et un troisième dispositif de réseau (203) doit traiter la demande d'emplacement ; et
obtenir une réponse à la demande d'emplacement sur la base des informations concernant l'opération de positionnement, la réponse comportant des informations d'emplacement du dispositif terminal (220), dans lequel, sur la base de la détermination précisant lequel parmi le premier dispositif de réseau (202), le deuxième dispositif de réseau (215) et le troisième dispositif de réseau (203) doit traiter la demande d'emplacement, la réponse est générée par le premier dispositif de réseau (202), reçue par le premier dispositif de réseau (202) en provenance du deuxième dispositif de réseau (215) ou reçue par le premier dispositif de réseau (202) en provenance du troisième dispositif de réseau (203), respectivement.
